Europäisches Patentamt

European Patent Office

Office européen des brevets

(19)

(11) Publication number: **0 161 292 B1**

(12) **EUROPEAN PATENT SPECIFICATION**
**published in accordance with Art.**
**158(3) EPC**

(45) Date of publication of patent specification: **31.07.91**    (51) Int. Cl.⁵: **A61C 1/07**

(21) Application number: **84904110.8**

(22) Date of filing: **12.11.84**

(86) International application number:
**PCT/DK84/00104**

(87) International publication number:
**WO 85/02106 (23.05.85 85/12)**

(54) **DEVICE FOR SENSING MECHANICAL CONTACT OR LOAD/NO-LOAD CONDITIONS.**

(30) Priority: **11.11.83 DK 5174/83**

(43) Date of publication of application:
**21.11.85 Bulletin 85/47**

(45) Publication of the grant of the patent:
**31.07.91 Bulletin 91/31**

(84) Designated Contracting States:
**DE FR**

(56) References cited:
**DK-B- 125 820**
**DK-B- 137 309**
**US-A- 4 184 092**

(73) Proprietor: **GOOF, Sven Karl Lennart**
**236A, Gl. Strandvej**
**DK-3050 Humlebaek(DK)**

(72) Inventor: **GOOF, Sven Karl Lennart**
**236A, Gl. Strandvej**
**DK-3050 Humlebaek(DK)**

(74) Representative: **Lorenz, Eduard**
**Rechtsanwälte Eduard Lorenz - Bernhard**
**Seidler Margrit Seidler - Dipl.-Ing. Hans-K.**
**Gossel Dr. Ina Philipps - Dr. Paul B. Schäu-**
**ble Dr. Siegfried Jackermeier**
**Widenmayerstrasse 23 D-8000 München**
**22(DE)**

## Description

This invention relates primarily to a device for sensing mechanical contact or load/no-load conditions.

Within several technical areas there is a need for sensing devices which are able to supply an output signal as soon as a particular component in the device is mechanically loaded or is touched. Typically the output signal provided by such devices are used to control particular functions, such as start/stop of equipment associated therewith.

For instance in precision machining tools such as precision milling machines, there is a need of very accurate and sensitive position detectors, such as zero adjustment and determining units. Electrical position switches previously used have generally been rather expensive, a.o. due to the necessity of making provisions to prevent or compensate for changes which gradually occur due to electrical contacts getting worn.

A device for sensing mechanical contact or load/no-load conditions as described in the preamble part of claim 1 is known from US-A-4 184 092. This prior art publication deals with an automatic cut-off or safety device which determines whether the instantaneous load is below or above a threshold value, and which disconnects the generator or reduces its power when the threshold load is exeeded. Thus it is necessary to continously monitor the load and to continuously compare the instantaneous load with the threshold load which has to be set and stored in advance. These operations require specific and rather comprehensive equipments for generating, storing and processing of signals. In particular, it must be provided not only a first signal representing the no-load condition but also a second signal which corresponds to the instantaneous load at any time during operation under load. The control signal is only used as a safety function in order to prevent unintended damages to a tooth, if the work tool is applied too strongly against the tooth. The problem as to fatigue fractures still remains.

It is therefore the object of the invention to improve a device for sensing mechanical contact or load/no-load conditions known in the prior art.

According to the invention this object is accomplished by the characterizing features of claim 1. As soon as the co-vibrating component of the mechanical vibrator is touched or loaded, this will cause a distinct change in the general state of oscillation for the vibrator as a whole. Through the coupling to the oscillatory circuit such a change will also cause a change in the quality factor Q and/or in the resonant frequency of the oscillatory circuit. Such changes, in turn, give rise to changes in the phase between current and voltage and also in the signal levels in the oscillatory circuit. The latter changes can be established or detected by electronic means and can be utilized to control or initiate switching operations.

As a self-contained unit or equipment the device of this invention is very suitable for use as an accurate and reliable position detector. Moreover, the device can be designed or used a completely spark-less switch or circuit breaker which is useful in environments with explosive or inflammable atmospheres.

A particular application of this invention is in combination with or incorporated into a material working instrument, such as an ultrasonic tooth treatment instrument, with a magnetostrictively powered work tool. Such instruments are used by dentists to remove tartar and the like and are also useful within several areas of fine mechanics, for instance for engraving. Generally, such instruments include a slim and elongate handle portion to be manipulated by the operator, held as a pencil in one hand. At one end of the handle portion there is mounted an appropriately shaped work tool having a cutting tip or edge which is put into high frequency vibrations by magnetostrictive transducer elements in the interior of the handle portion.

Thus, the present invention also relates to a combination or an instrument of the type defined in the opening clause of claim 4

Since instruments of this type are operated with relatively high power, there is a risk that fatigue fractures develop in the material of the work tool, in particular if the instrument is kept in operation during prolonged periods without loads on the tool, i.e. without the work tool being in contact with an object (e.g. a tooth).

Accordingly it has been common practice to provide a start/stop switch to be manipulated by the operator, and whereby the power is manually switched off during interruptions in the treatment of an object, i.e. when the work tool is out of contact with the object. Such switches can be designed as a foot-lever or switch or can be mounted on the handle portion of the instrument.

The working instrument of this invention is preferably characterized by the features defined in the characterizing clause of claim 4 Thereby a start/stop switch is rendered superfluous, which is a substantial relief or convenience to the operator. Thus whenever the work tool is out of contact with the object to be treated, the generator can operate at a relatively low supply voltage, whereby the work tool is maintained in an idling or stand-by oscillation. However, as soon as the work tool gets in contact with the object to be treated, the supply voltage of the generator will be switched to a higher value, whereby the work tool is maintained in a working oscillation or condition at least as long as the tool is in contact with the object, whereafter the tool reassumes its stand-by oscillation. In other words it is possible for the operator to switch over from a stand-by or idling condition to an operational condition just by touching the object to be treated. Simultaneously the control or switch device can be operative to initiate or control supply of cooling and/or flushing media, in particular in dental instruments.

Appropriately the control device can include a delay which maintains the tool in working condition for a short period of time after that the tool has been brought out of contact with the object.

Other features and advantages of the invention will become apparent in the following detailed description taken in conjuction with the accompanying drawings in which:

figure 1 shows a material working instrument with magnetostrictively powered work tool,

figure 2 shows an embodiment of transducer elements in the instrument of figure 1,

figure 3 is a sectional view illustrating the transducer elements in figure 2 with a work tool and with a magnet for magnetically biasing the tranducer core mounted thereon,

figure 4 is a diagram schematically illustrating an embodiment of the sensing device of the invention combined with or incorporated in an instrument of the type shown in figures 1 to 3,

figure 5 is a diagram schematically and more generally showing the principles of a sensing device in accordance with the invention, and

figures 6A and 6B are respective graphs illustrating the frequency-dependency of the phase and signal level and amplitude.

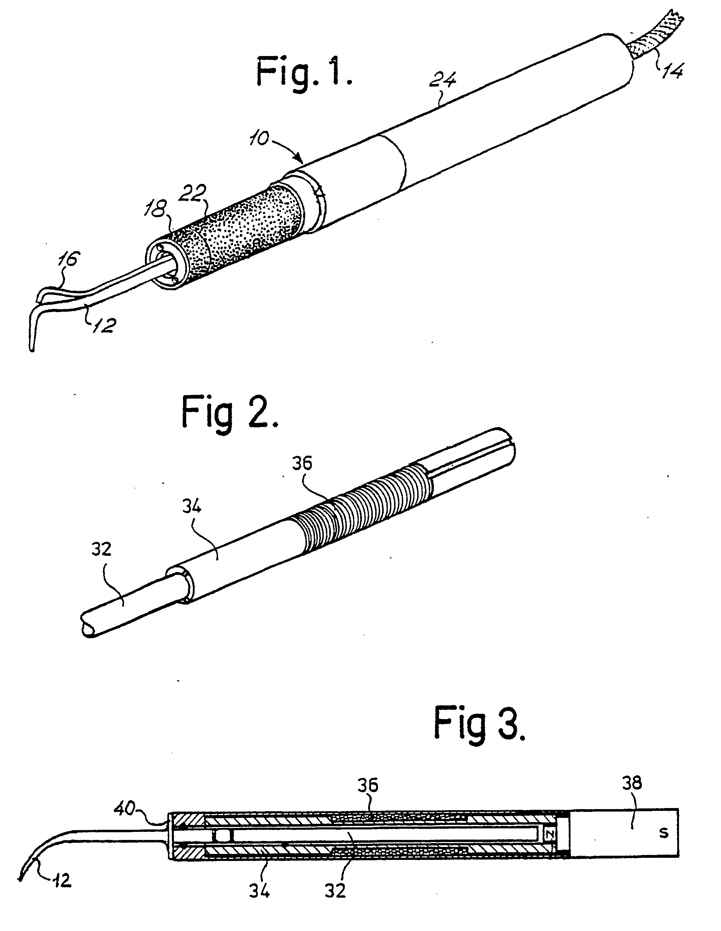

The instrument 10 shown in figure 1 of the drawings is designed as a dental instrument for removal of tooth coatings. The instrument includes a magnetostrictively moved work tool shaped as a tip 12 carried by mountings 18, 22 of which at least one is removably supported by a handle portion 24 of the instrument. Moreover, the work tool is removably connected with a transducer core located in the interior of the instrument. In order to flush away removed materials, the instrument may have a nozzle 16 to which water is supplied through a cable 14 which also includes electrical wirings for the instrument.

Figures 2 and 3 show an embodiment of a transducer unit which is located in the interior of the handle portion 24. As shown the transducer core 32 mentioned above is inserted in the interior of a tubular portion 34 which supports a coil 36 exteriorly on a central part. A permanent magnet 38 is mounted at one end of the tubular portion 34.

With a design as shown, the permanent magnet 38 will magnetize the core 32 and when an appropriate high frequency alternating voltage is supplyed to the coil 36 this will produce an alternating field which is able to put the core in high frequency oscillations which are transferred to the work tool 12.

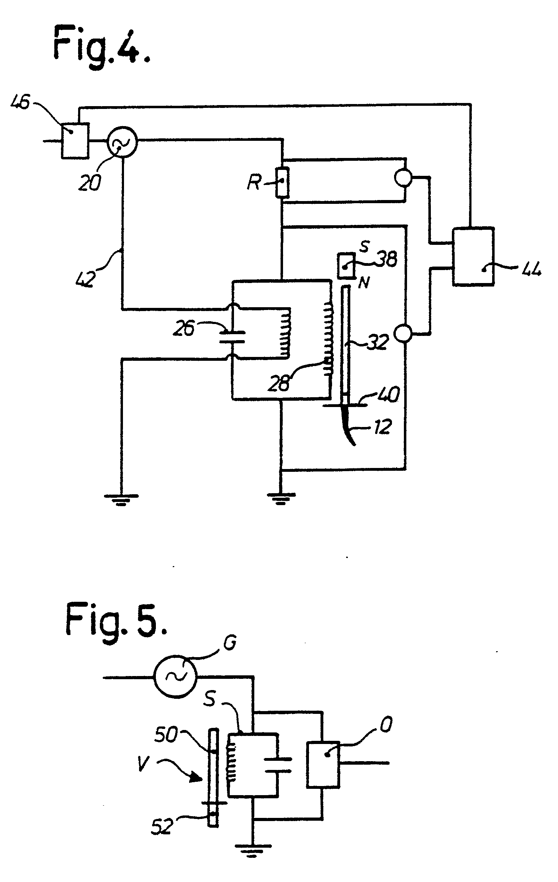

Reference is now made to figure 4 which schematically illustrates an instrument of the type mentioned above in combination with or equipped with a sensing device in accordance with the invention. A generator 20 is connected with an oscillatory circuit which includes a capacity 26 and a coil 28 which corresponds to the coil 36 in figures 2 and 3. Moreover, the transducer core 32 with its tool 12 and associated permanent magnet 38 are shown.

When the tool 12 is free, the generator 20 operates at a relatively low supply voltage and the oscillatory cicuit is kept in oscillations thereby. The core 32 and the tool 12 oscillate together with the oscillatory circuit and hereby the tool performs a no-load oscillation. The core 32 and the tool 12, which can be considered as a mechanical vibrator, has a particular no-load condition of vibrations in which a node point has been provided by means of a fixture which is indicated as a flange 40.

As soon as the tip of the tool is touched or loaded there will be an externally enforced change in the condition of vibration and a change in the mechanical impedance of the vibrator occurs. Through the coupling between the core 32 and coil 28 this is transferred to the oscillatory circuit whereby its quality factor Q and/or its resonant frequency $f_o$ will be changed. These changes in turn cause a change in the phase between current and voltage and a change in the signal level. The latter changes in the oscillatory circuit can be established or measured. A circuit 42 provides feedback to the generator 20.

The embodiment shown is based on measurement or establishment of changes in the phase between current and voltage. For that purpose the voltage is measured across the oscillatory circuit, and the current is measured across a resistance R having a suitably small value. The two values are supplied to a comparison unit 44 which provides an output signal when a change in the phase between current and voltage occurs, i.e. when the tool 12 is touched or loaded.

In the embodiment shown the unit 44 is part of a control or switch circuit which also includes a control unit 46. The output signal from the unit 44 is applied to the control unit 46 and when the output signal is present the unit 46 provides switching of the supply voltage for the generator 20 from the low idling value to a higher operational value. Even if the amplitudes of the electrical measuring signals correspond to the idling condition, an output signal from unit 44 will still be present since a phase difference is still present.

The control or switch circuit can also include further switching units, for instance a unit which controls supply of water to the nozzle 16 in figure 1.

When the output signal from the unit 44 ceases, the control unit 46 returns to low supply voltage. However, it may be appropriate to incorporate a suitable delay or holding circuit which causes that the return to idling voltage and possible other switching or contact functions be delayed for a suitable time, for instance 1 second.

Thus, it will appear that the provisions in accordance with the invention will cause the tool 12 to perform a relatively small no-load oscillation which automatically is changed to a working oscillation as soon as the tool touches an object.

It should be appreciated that the pre-magnetizing of the transducer core not necessarily shall have to be made by means of the permanent magnet 38. As an alternative the coil 28 can be supplied with a DC current with an AC current superimposed thereon, whereby the DC component provides a pre-magnetizing, i.e. a unification or orientation of the elementary magnets of the core material, and whereby the superimposed AC component produces the oscillations in the core.

Reference is now made to figure 5 which schematically and more generally illustrates a sensing device in accordance with the invention. An oscillatory circuit S has a generator G, and a mechanical vibrator V is coupled to oscillate together with the oscillatory circuit. The vibrator includes a vibratory component 50 which corresponds to the transducer core 32 in figure 4, and a covibrating part or a sensor part 52 which corresponds to a tool 12 in figure 4 and is designed for contact or loading for instance by an object or a finger.

Again such a contact or loading will cause a change in the oscillation of the vibrator and this change provides an impedance change in the oscillatory circuit. Thus, in the oscillatory circuit there will be a change of the phase relation between current and voltage and a change in the signal level. Either of the these changes or both changes can be established in a unit or electronic circuit O which supplies an output signal, when or at least as long as the changes in question are present. This output signal can be utilized to control or initiate switching operations.

Accordingly a sensing device in accordance with the invention is useful for other purposes than that described above in connection with figure 4. The sensor part 52 of the vibrator V can be specially designed or shaped depending on whether the sensor part is to be touched by an object or by a finger. Moreover, the sensor part 52 can be particularly designed so that the free or no-load oscillation thereof obtains a desired configuration. With an appropriate bending of the sensor part to a shape similar to the tool 12 in figure 4, the tip of the sensor part can perform an elliptical no-load oscillation and accordingly there will be an axis with major sensitivity. Similarly the sensor part 52 can be shaped to perform no-load oscillations along a circle or along a sphere whereby the sensitivity will become uniform in several directions.

Where it is preferred in connection with embodiments as that of figure 4 it is not necessary that the vibratory component 50 of the mechanical vibrator is a barshaped element. Other shapes, such as a plateshape, may also be employed.

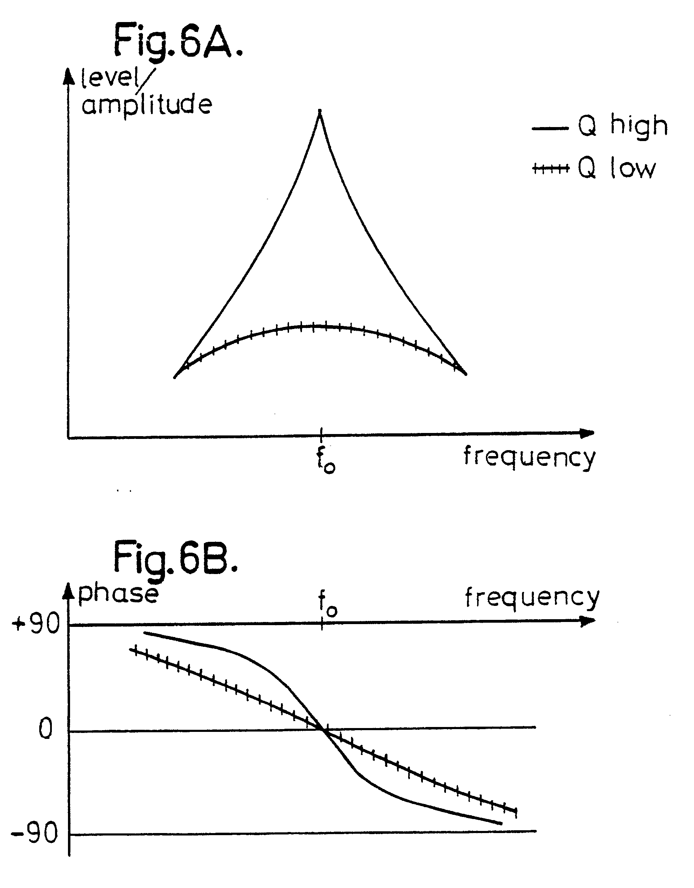

Figures 6A and 6B are respective schematic presentations of the amplitude and of the phase between current and voltage, in both instances as a function of the frequency adjacent the resonant frequency $f_0$. In an instrument as that shown in figure 4 it is preferred that the no-load frequency is somewhat below $f_0$. By an appropriate adaptation it can be obtained that a loading of the tool 12 with a normal contact pressure will cause the frequency to move up to or adjacent to the resonant frequency whereby optimum power delivery is obtained in and about the normal working condition. If, however, the tool is pressed strongly against an object the frequency will increase beyond the resonant frequency, and at heavier loads the conditions of oscillation will not be fulfilled and the oscillation will eventually stop. This is a very useful feature in connection with tooth treatment instruments as that shown in figure 4, since particular power disconnecting safety provisions are not necessary.

## Claims

1. A device for sensing mechanical contact or load/no-load conditions, comprising

   a generator (G) providing at an output thereof an alternating output signal;

   an oscillatory circuit (S) connected to said generator output and powered by said generator output signal to oscillate at a predetermined frequency;

   a mechanical vibrator device (V) being electromagnetically coupled to said oscillatory circuit to oscillate therewith, and said vibrator device including a vibratory component (50) carrying a co-vibrating part (52) adapted to receive external mechanical loads thereon, said co-vibrating part (52) performing, without any external load thereon, vibrations determined by said predetermined frequency, thereby providing a no-load condition, and said co-vibrating part (52) causing, when subjected to external loads, changes in the general state of vibration of said vibrator device (V) and thereby enforcing changes as to current-to-voltage phase relation and signal level relation in said oscillatory circuit and

means (O) associated with said oscillatory circuit (S) to establish at least one of said changes whenever enforced in said oscillatory circuit, said means (O) further including means for providing at an output thereof, a digital output signal, said output signal having a first signal level during said no-load condition, and said output signal assuming a second signal level as soon as and at least as long as said no-load condition does not exist;

characterized in that

said digital output signal is connected to a control device, whereby said first signal level switches a voltage supply for said generator (G) to a first idling voltage value, and whereby said second signal level causes said control device to switch said generator voltage supply to a second operational voltage value.

2. A sensing device as defined in claim 1, characterized in that said vibratory component (50) of said mechanical vibrator (V) comprises a rod shaped element being of a magnetizable material and located in the alternating magnetic field of a coil (28) of said oscillatory circuit.

3. A sensing device as defined in claim 2, characterized in that said rod shaped element is bias-magnetized by a permanent magnet (38).

4. A sensing device as defined in one of claims 1 to 3 in combination with or incorporated in a material working instrument of the type comprising

an electromechanical transducer including a magnetizable core (32) and a coil (28), and

a generator (20) operable to produce oscillations in said transducer core, when magnetized, and thereby provide movements of a work tool (12) connected to said transducer core (32),

said transducer core and said work tool connected thereto being parts of said mechanical vibrator of the sensing device, the work tool (12) providing said co-vibrating part for receiving external loads, and said transducer coil (28) being part of said oscillatory circuit of the sensing device,

the combination characterized by said digital output signal of said change-establishing means (44) being applied to a control or switch device (46), whereby said first signal level switches a voltage supply for said generator (20) to an idling voltage value, causing said work tool (12) to vibrate at a low level stand-by oscillation, and whereby said second signal level causes said control device (46) to switch said generator voltage supply on to an operational voltage value.

**Revendications**

1. Dispositif pouvant détecter un contact mécanique ou des conditions de charge/absence de charge, comprenant
un générateur (G) délivrant à sa sortie un signal de sortie alternatif;
un circuit oscillant (S) raccordé à ladite sortie du générateur et alimenté par ledit signal de sortie du générateur pour osciller à une fréquence prédéterminée;
un dispositif formant vibrateur mécanique (V) couplé par voie électromagnétique audit circuit oscillant pour osciller conjointement avec ce dernier, et ledit dispositif formant vibrateur comprenant un composant vibrant (50) portant un élément covibrant (52) apte à recevoir des charges mécaniques externes, ledit élément covibrant (52) étant le siège de vibrations déterminées par ladite fréquence prédéterminée, sans qu'aucune charge externe lui soit appliquée, ce qui fournit une condition d'absence de charge, et ledit élément covibrant provoquant, lorsqu' il est soumis à des charges externes, des variations de l'état général de vibration dudit dispositif formant vibrateur (V) et imposant, de ce fait, des variations à la relation de phase courant-tension et à la relation des niveaux du signal dans ledit circuit oscillant; et
des moyens (O) associés audit circuit oscillant (S) pour établir au moins l'une desdites variations chaque fois qu'elle est imposée dans ledit circuit oscillant, lesdits moyens (O) comprenant en outre des moyens pour délivrer, au niveau d'une sortie, un signal de sortie numérique, ledit signal de sortie possédant un premier niveau pendant ladite condition d'absence de charge, et passant à un second niveau dès que et au moins tant que ladite condition d'absence de charge n'existe pas;
caractérisé en ce que
ledit signal de sortie numérique est appliqué à un dispositif de commande, grâce à quoi ledit premier niveau du signal commute une alimentation en tension prévue pour ledit générateur (G) sur une première valeur de tension de repos, et ledit second niveau du signal amène ledit dispositif de commande à commuter ladite alimentation en tension du générateur sur une seconde valeur de tension opérationnelle.

2. Dispositif de détection selon la revendication 1, caractérisé en ce que ledit composant vibrant (50) dudit vibrateur mécanique (V) comprend un élément en forme de barre réalisé en un matériau aimantable et situé dans le champ magnétique alternatif d'une bobine (28) dudit circuit oscillant.

3. Dispositif de détection selon la revendication 2, caractérisé en ce que ledit élément en forme de barre est polarisé magnétiquement par un aimant permanent (38).

4. Dispositif de détection selon l'une des revendications 1 à 3, en combinaison avec ou incorporé dans un appareil d'usinage d'un matériau, du type comprenant
un transducteur électromagnétique comprenant un noyau aimantable (32) et une bobine (28), et
un générateur (20) apte à fonctionner pour produire des oscillations dans ledit noyau du transducteur, lorsqu'il est aimanté, et déclencher de ce fait des déplacements d'un outil de travail (12) raccordé audit noyau (32) du transducteur,
ledit noyau du transducteur et ledit outil de travail, raccordé à ce noyau, constituant des éléments dudit vibrateur mécanique du dispositif de détection, l'outil de travail (12) constituant ledit élément covibrant destiné à recevoir des charges externes, et ladite bobine (28) du transducteur faisant partie dudit circuit oscillant du dispositif de détection,
la combinaison étant caractérisée en ce que ledit signal de sortie numérique desdits moyens (44) provoquant des variations est appliqué à un dispositif de commande ou de commutation (46), ce qui a pour effet que ledit premier niveau du signal commute une tension d'alimentation prévue pour ledit générateur (20) sur une valeur de tension de repos, ce qui amène ledit outil de travail (12) à vibrer selon une oscillation en attente à niveau faible, et que ledit second niveau du signal amène ledit dispositif de commande (46) à commuter ladite alimentation en tension du générateur sur une valeur de tension opérationnelle.

## Patentansprüche

1. Vorrichtung zum Erfassen eines mechanischen Kontaktes oder von Belastungszuständen, mit

einem Generator (G), der an einem Ausgang ein alternierendes Ausgangssignal abgibt,

einem Schwingkreis (S), der mit dem Generatorausgang verbunden ist und durch das Generatorausgangssignal angesteuert wird, um bei einer vorbestimmten Frequenz zu schwingen,

einer mechanischen Vibrationsvorrichtung (V), die mit dem Schwingkreis zur Schwingung mit diesem elektromagnetisch verbunden ist, wobei die Vibrationsvorrichtung ein Vibrationsbauteil (50) umfaßt, das ein mitschwingendes Teil (52) trägt, welches mit äußeren mechanischen Lasten beaufschlagt werden kann, wobei das mitschwingende Teil (52) im unbelasteten Zustand durch die vorbestimmte Frequenz festgelegte Vibrationen ausführt und damit eine Bedingung ohne Belastung schafft, und wobei das mitschwingende Teil (52) bei Beaufschlagung mit Lasten von außen Änderungen im allgemeinen Vibrationszustand der Vibrationsvorrichtung (V) veranlaßt und dadurch Änderungen bezüglich des Strom/Spannungs-Phasenverhältnisses und des Signalgrößenverhältnisses im Schwingkreis hervorruft, und

dem Schwingkreis (S) zugeordneten Mitteln (O) zum Erzeugen von mindestens einer dieser Änderungen, sobald diese im Schwingkreis hervorgerufen werden, wobei die Mittel (O) außerdem Mittel zum Liefern eines digitalen Ausgangssignals an einem Ausgang umfassen, und das Ausgangssignal im unbelasteten Zustand eine erste Signalgröße hat, und das Ausgangssignal eine zweite Signalgröße einnimmt, sobald oder zumindest solange dieser unbelastete Zustand nicht vorliegt,

**dadurch gekennzeichnet,**

daß das digitale Ausgangssignal einem Steuergerät zugeführt wird, wodurch die erste Signalgröße eine Spannungsversorgung für den Generator (G) auf einen ersten Blindspannungswert schaltet, und wodurch die zweite Signalgröße das Steuergerät veranlaßt, die Generatorspannungsversorgung auf einen zweiten Betriebsspannungswert zu schalten.

2. Erfassungsvorrichtung nach Anspruch 1, dadurch gekennzeichnet, daß das Vibrationsbauteil (50) des mechanischen Vibrators (V) ein stabförmiges Element umfaßt, das aus einem magnetisierbaren Material besteht und sich im magnetischen Wechselfeld einer Spule (28) des Schwingkreises befindet.

3. Erfassungsvorrichtung nach Anspruch 2, dadurch gekennzeichnet, daß das stabförmige Element durch einen Dauermagneten (38) vormagnetisiert wird.

4. Erfassungsvorrichtung nach einem der Ansprüche 1 bis 3 in Kombination mit oder eingebaut in einer Materialbearbeitungsvorrichtung mit

einem elektromechanischen Wandler mit einem magnetisierbaren Kern (32) und einer Spule (28), und

einem Generator (20), der zur Erzeugung von Schwingungen im Wandlerkern im magnetisierten Zustand betrieben wird, wodurch ein mit dem Wandlerkern (32) verbundenes Bearbeitungswerkzeug (12) verfahren wird,

wobei der Wandlerkern und das damit verbundene Bearbeitungswerkzeug Teile des mechanischen Vibrators der Erfassungsvorrichtung sind, und das Bearbeitungswerkzeug (12) das mitschwingende Teil zur Beaufschlagung mit Lasten von außen vorsieht, und die Wandlerspule (28) Teil des Schwingkreises der Erfassungsvorrichtung ist,

wobei die durch das digitale Ausgangssignal der die Änderungen durchführenden Mittel (44) charakterisierte Kombination in einem Steuer- bzw. Schaltgerät (46) eingesetzt wird, wodurch die erste Signalgröße eine Spannungsversorgung für den Generator (20) auf einen Blindspannungswert schaltet, was bewirkt, daß das Bearbeitungswerkzeug (12) mit einer Bereitschaftsschwingung auf einem niedrigen Wert vibriert, und wodurch die zweite Signalgröße das Steuergerät (46) veranlaßt, die Generatorspannungsversorgung auf einen Betriebsspannungswert zu schalten.

Fig. 1.

Fig 2.

Fig 3.

# Fig.4.

# Fig.5.

## Fig.6A.

## Fig.6B.